## Europäisches Patentamt

## European Patent Office

## Office européen des brevets

(19)

(11) Publication number: **0 025 499**
A2

(12)

# EUROPEAN PATENT APPLICATION

(21) Application number: **80104448.8**

(22) Date of filing: **29.07.80**

(51) Int. Cl.³: **F 16 H 1/42, B 60 K 17/16**

(30) Priority: **20.08.79 US 68240**

(43) Date of publication of application: **25.03.81**
**Bulletin 81/12**

(84) Designated Contracting States: **BE DE FR GB IT SE**

(71) Applicant: **CATERPILLAR TRACTOR CO., 100 Northeast Adams Street, Peoria Illinois 61629 (US)**

(72) Inventor: **Chambers, Robert Orville, 926 Main Street Apt. 1009 Glen Oak Towers, Peoria Illinois 61602 (US)**

(74) Representative: **Wagner, Karl H., P.O. Box 246 Gewuerzmuehlstrasse 5, D-8000 München 22 (DE)**

(54) **Differential for multiplying torquing force and drive train.**

(57) A differential (10) initiates differentiation and divides a rotational input to, most commonly, provide separate but equal torquing forces associated with the resultant divided rotational output. The differential (10) can be used, for example, on a work vehicle (12) to transmit a rotational output to each of its driving wheels or on a steering assembly to provide separate steering outputs. On the work vehicle (12), for example, speed reduction of the rotational input is sometimes taken in a final drive in the wheels to adjust rotational speed of the wheels relative to input speed from the vehicle engine (16). In the differential (10), both the differentiation and multiplication of the torquing force are initiated through a preselected relationship of the planetary gear assemblies (32, 34) of differential which, in the example of the vehicle (12), would provide a speed reduction. This can eliminate, or allow the use of smaller or less complex, final drives for reducing vehicle weight and simplifying vehicle operation.

0025499

## Description

## Differential for Multiplying Torquing Force

### Technical Field

The invention relates to differentials which divide output speed and torquing force. More particularly, the invention relates to differentials which initiate torquing force multiplication as well as dividing output speed and torquing forces.

### Background Art

In the use of a differential which provides differentiation between output elements, it is desirable in certain applications to also provide a multiplication of torquing forces through said differential. Thus, the input torquing force to the differential is multiplied at the output elements which results in either a rotational speed reduction or increase at said output elements relative to the rotational input.

U.S. Patent 1,395,668 which issued to Drill on November 1, 1921, shows a planetary transmission and steering mechanism having two planetary gear assemblies each associated with a wheel of an associated tractor. Torque multiplication in the rotational output directed to the wheels is initiated by taking a rotational input through a shaft between associated planetary gear assemblies to the output elements. Differentiation is initiated in the transmission by distinct apparatus which interconnects ring gear elements of the planetary gear assemblies. Also, in Gear Trains by H.E. Merritt and published in 1947 by Sir Isaac Pitman & Sons, Ltd., a contra-rotating planetary differential is disclosed which interconnects two planetary gear assemblies through their sun gears and has an input to the ring gear of one gear assembly while the ring gear of the other is fixed from rotation. The output is taken through two shafts each of which is connected to a respective one of the carrier elements of the gear assemblies and which rotate in opposite directions. It should be noted that use of the term "planetary" herein refers to any arrangement of sun, planet, carrier and ring elements and is not used in any sense in which a certain element, or elements, is, or are, always free for rotation.

U.S. Patent 4,041,804 which issued on August 16, 1977, to Clark and U.S. Patent 3,323,389 which issued on June 6, 1967, to Hause also disclose embodiments of planetary differentials which provide differential action only, desired torque multiplication being provided separately from the differentials. Additionally, U.S. Patents 3,535,954 which issued to Chambers on October 27, 1970, and 3,044,320 which issued to Oudry on July 17, 1962, show differentials without torque multiplication associated with steering of track-type tractors.

A differential is most commonly provided on a wheeled vehicle to divide a rotational input from an engine and transmission into separate rotational outputs directed to the drive wheels of the vehicle. In such an application, the differential initiates equal torqing forces to the wheels for directional stability and permits different rotational speeds of the wheels to accommodate vehicle turning or slippage of one wheel in poor traction conditions. For example, a bevel gear differential is provided in most automobiles, trucks, and other types of vehicles.

In larger vehicles it is also generally necessary to reduce the speed of the wheels relative to rotational speed of the power source or engine which provides the driving force to the wheels, owing to the higher speed or revolutions of the engine relative to the desired speed of the wheels. Some speed reduction is generally taken in the transmission of the vehicle. Where necessary, such as in trucks or earthmoving vehicles where high reduction is desirable, additional reduction can be taken separately from the transmission.

For example, in a wheel loader it is common to provide a final drive in each driven wheel to receive the divided rotational output from the differential. The final drive further reduces the rotational speed to drive the associated wheel. Correspondingly, a torquing force multiplication is achieved through the final drive which, in the case of a speed reduction, results in a higher torquing force relative to that transmitted from the differential for driving the wheels. In other words, multiplication of the torquing force and reduction in speed are interrelated in the function of a final drive.

In such final drive applications, space is often severely limited within or adjacent the wheel while the high driving torquing force necessary in such vehicles requires high capacity final drives. Such final drives are generally planetary gear assemblies which can be provided with increased capacity by using more than three planet gear elements. This, however, limits the maximum speed reduction obtainable in the final drive owing to the use of smaller planet gears relative to the sun and ring gears which limits the gear ratio of the ring to the sun gear.

Therefore, it is desirable to provide additional speed reduction elsewhere in the vehicle. It is also desirable to limit the additional weight and components to be added to the vehicle for the additional speed reduction. By taking such speed reduction in the differential, therefore, additional weight and numbers of components can be minimized. Also, for example, the use of a speed reducing planetary differential can eliminate the need for hypoid gears or large bevel gears in, for example, trucks where large speed reduction is necessary.

## Disclosure of Invention

In one aspect of the present invention, a differential receives a rotational input and transmits a divided rotational output. The differential has a first planetary gear assembly which has preselected first and second ones of ring, sun and carrier elements transmitting one portion of the rotational output and receiving the rotational input, respectively. A second planetary gear assembly has first and second preselected different ones of ring, sun and carrier elements transmitting another portion of the rotational output and tied to the remaining third one of the elements of the first gear assembly. The remaining third one of the elements of the second gear assembly is fixed relative to a frame of the differential.

In another aspect of the present invention, the differential has lock-up means for controllably initiating and terminating differentiation in said differential.

For example, the differential provides equal torquing force to wheels of a vehicle and initiates relative rotation between the wheels to accommodate turning of the vehicle or wheel slippage. A torquing force multiplication is also initiated in or taken through the differential which substantially eliminates or reduces the torque multiplication needed to be taken elsewhere in the vehicle and simplifies or eliminates the need for other components for further speed change in the vehicle. The lock-up means, in effect, blocks operation of the planetary gear assemblies in order to eliminate the differentiation of the differential to reduce spinning in low traction conditions.

Brief Description of Drawings

FIG. 1 is a diagrammatic partial cross-sectional view of one embodiment of the present invention which initiates a torquing force multiplication and an associated speed reduction and is associated with a work vehicle;

FIG. 2 is a schematic representation of another embodiment of the present invention which initiates torquing force multiplication with an associated speed reduction;

FIG. 3 is a schematic representation of still another embodiment of the present invention which initiates a torquing force multiplication with an associated speed reduction;

FIG. 4 is a schematic representation of one embodiment of the present invention which initiates a torquing force multiplication with an associated speed increase;

FIG. 5 is a schematic representation of one embodiment of the present invention which has a double planet planetary gear assembly and initiates a torquing force multiplication with an associated speed reduction;

FIG. 6 is a schematic representation of yet another embodiment of the invention which has two double planet planetary gear assemblies and initiates a torquing force multiplication with an associated speed reduction; and

FIG. 7 is a schematic representation of still yet another embodiment of the invention which initiates a torquing force multiplication with an associated speed reduction.

## Best Mode for Carrying Out The Invention

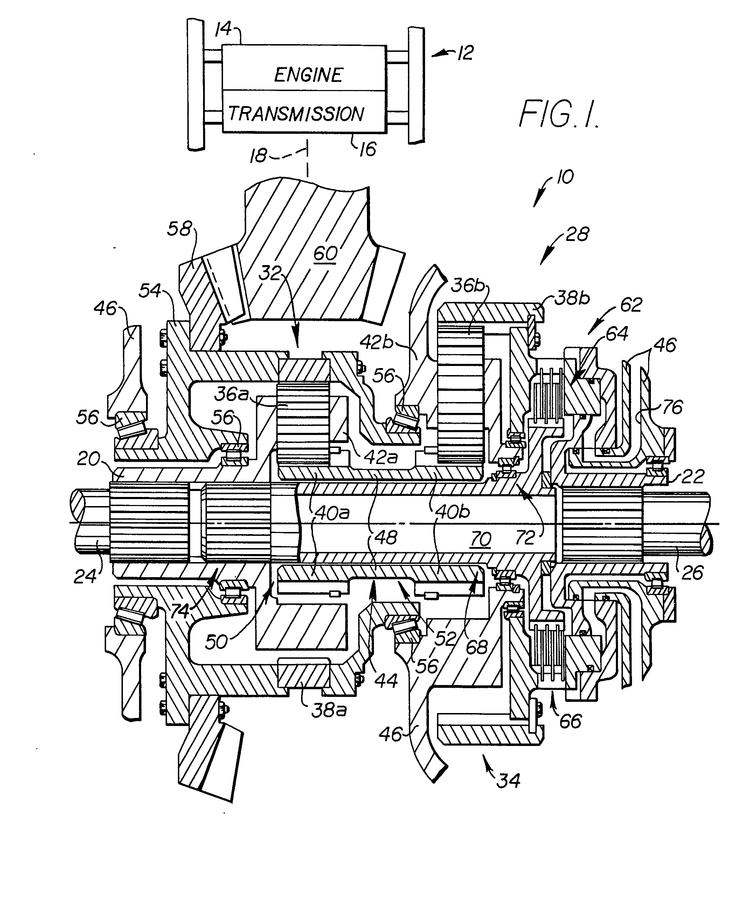

Referring to the drawings, and particularly to FIG. 1, a differential 10 is shown associated with a work vehicle 12 having a power source or engine 14, a transmission 16, and a drive shaft 18 positioned between said engine and transmission and said differential. The differential receives a rotational input from the engine through the transmission and drive shaft and transmits a rotational output through first and second output elements 20,22. The first and second output elements are connected to first and second axles 24,26, respectively, of the work vehicle for transmitting related portions of the rotational output in a common directional or rotational orientation from the differential to drive the wheels (not shown) of the work vehicle. Said axles are shown splinably connected to the output elements. Such vehicle construction is well known in the art and is commonly used on many types of vehicles as the drive train portion 27 of the vehicles.

As is commonly known, a differential is provided in work vehicles to divide the associated torquing forces, or torque, and rotational speed of the rotational input to the differential. The differential preferably provides equal torquing forces to each of the axles 24,26 of the vehicle, but allows unequal rotational speed of said axles in order to accommodate turning of the vehicle. As such the differential has torquing forces and a rotational speed component associated with its rotational input and rotational output.

The differential 10 has first and second planetary gear assemblies 32,34 each having sets of planet, ring, sun and carrier elements denoted by a and b, respectively, of reference numerals 36,38,40 and 42.

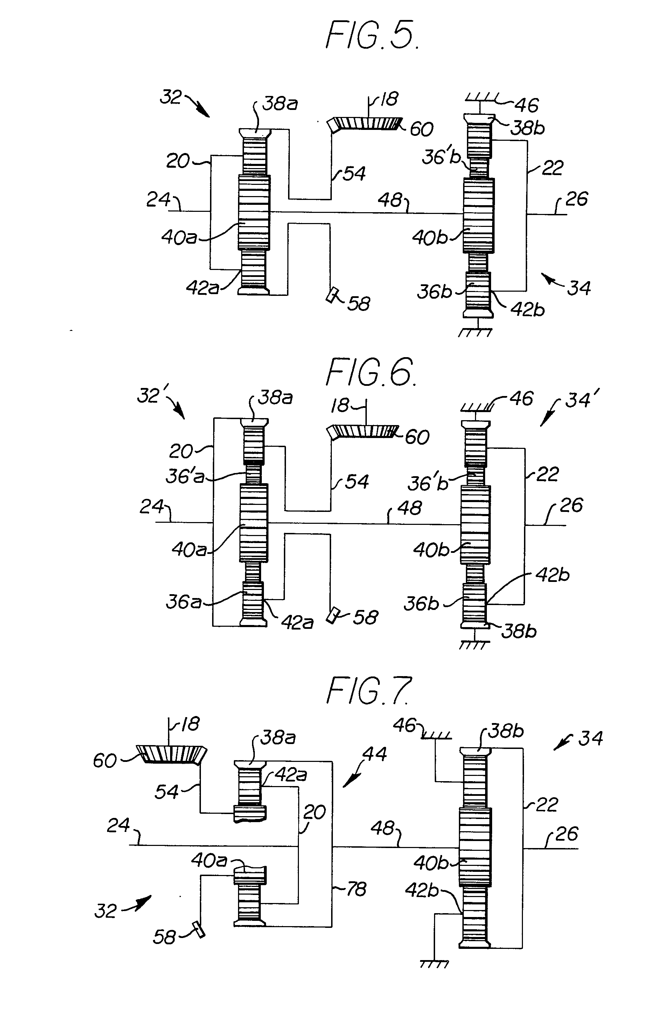

The first and second planetary gear assemblies are connected at preselected first ones of said ring, sun and carrier elements to the first and second output elements 20,22, respectively, for transmitting the related portions of the divided rotational output in the same, or a common, preselected rotational or directional orientation. A preselected second different one of said ring, sun, and carrier elements of the first planetary gear assembly is positioned at a location sufficient for receiving the rotational input. A preselected second different one of the ring, sun and carrier elements of the second planetary gear assembly is connected to or tied in operable or common rotating relationship with the remaining third one of said ring, sun and carrier elements of the first planetary gear assembly. The remaining third one of said elements of the second planetary gear assembly is fixed relative to the frame. At least one of said planetary gear assemblies can also be a double planet planetary gear assembly, 32' or 34', which has an additional planetary element 36'a;b (Figs. 5 and 6).

The differential 10 also has a support member 44 and a frame 46. The support member 44 supports the planetary gear assemblies 32,34. Also, the support member, shown primarily as a shaft 48, has first and second end portions 50,52 and is supported by and rotatable relative to the frame. The first and second end portions are connected to the remaining third one of the ring, sun and carrier elements 38,40,42a of the first planetary gear assembly 32 and the second preselected one of the corresponding elements 38,40,42b of the second planetary gear assembly 34, respectively.

For example, in the embodiment shown in Fig. 1, which is representative of the construction of the differential 10, the shaft 48 is connected to the sun elements 40a;b of the planetary gear assemblies 32,34 to rotatably connect said sun elements one to the other. Said shaft is supported only indirectly by the frame in this embodiment in that small differences on the teeth of the sun elements carry said support member relative to their mating planet elements. The first and second output elements 20,22 are connected to the carrier 42a and ring 38b elements of said first and second planetary gear assemblies, respectively. The rotational input is received through the ring element 38a of the first planetary gear assembly from a motion receiving element 54 rotatably supported relative to the frame 46 and the first output element 20 by bearings 56. The motion receiving element has a bevel gear portion 58 which meshes with a bevel gear 60 associated with the drive shaft 18 for directing the rotational input to the differential. The carrier element 42b of the second planetary gear assembly can be fixed, for example, by being integrally associated with the frame 46.

As will be seen from a study of the drawings, therefore, each of the planetary gear assemblies 32,34 has one of its ring, sun and carrier elements 38,40,42a;b associated with the related rotational output. And in the embodiments of FIGS. 1-4 and 6-7, the one of the elements connected to the first output element is a different one relative to the one of the elements connected to the second output element. Another one of the elements of each of the first and second planetary gear assemblies is associated with an "interconnection" between said planetary gear assemblies while the other elements of each of said gear assemblies are free from being tied in operable relationship with any other elements of the other of said gear assemblies.

Further referring to FIG. 1, the differential 10 is shown with lockup means 62 for controllably initiating and terminating differentiation in said differential. The lockup means includes means 64, shown as a clutch 66, for controllably connecting the first and second output elements 20,22 one to the other and freeing said first and second output elements from connection one with the other. In other words, the clutch engages both axles 24,26 together to, in effect, bypass the planetary gear assemblies 32,34 and eliminate differentiation through the differential 10.

As is shown in FIG. 1 the lockup means 64 includes a motion transmitting element 68, shown as a shaft 70, which is carried by the frame 46 through bearings 72. Said shaft is positioned in or through the shaft 48 and is rotatable with the first output element 20 through a splined connection 74 with said output element. The shaft is thus also rotatable relative to the frame on the bearings 56 associated with said first output element. The shaft 48 interconnecting the first and second planetary gear assemblies 32,34 is therefore positioned about and rotatable relative to the shaft 70 associated with the lockup means 64. Differentiation is eliminated by engagement of the shaft 70 and the second output element 22 through the clutch 66.

The construction details described in the embodiment of FIG. 1 and the related discussion are representative of the constructions which may be used in carrying out the other embodiments. It should be understood that the differential 10, and in particular the geared member 30, can be of other configurations as is known in the art without departing from the invention. The clutch 60 can be of any configuration known in the art, such as the conventional friction plate clutch, and may be actuated in any known way

-10-

such as electrically, hydraulically or mechanically. For example, in the embodiment shown, a fluid passage 76 is provided in the frame 46 for directing fluid to said clutch for actuation thereof.

Industrial Applicability

In the operation of the differential 10, the rotational input, with its associated speed and torquing force components, is transmitted from the engine 14 through the bevel gear 60 to the bevel gear portion 58 of the differential. The resultant rotation of the motion receiving element 54 initiates rotation of the one of the ring, sun and carrier 38,40,42a elements of the first planetary gear assembly 32 which is connected to said motion receiving element. Each of the embodiments shown will now be discussed in more detail.

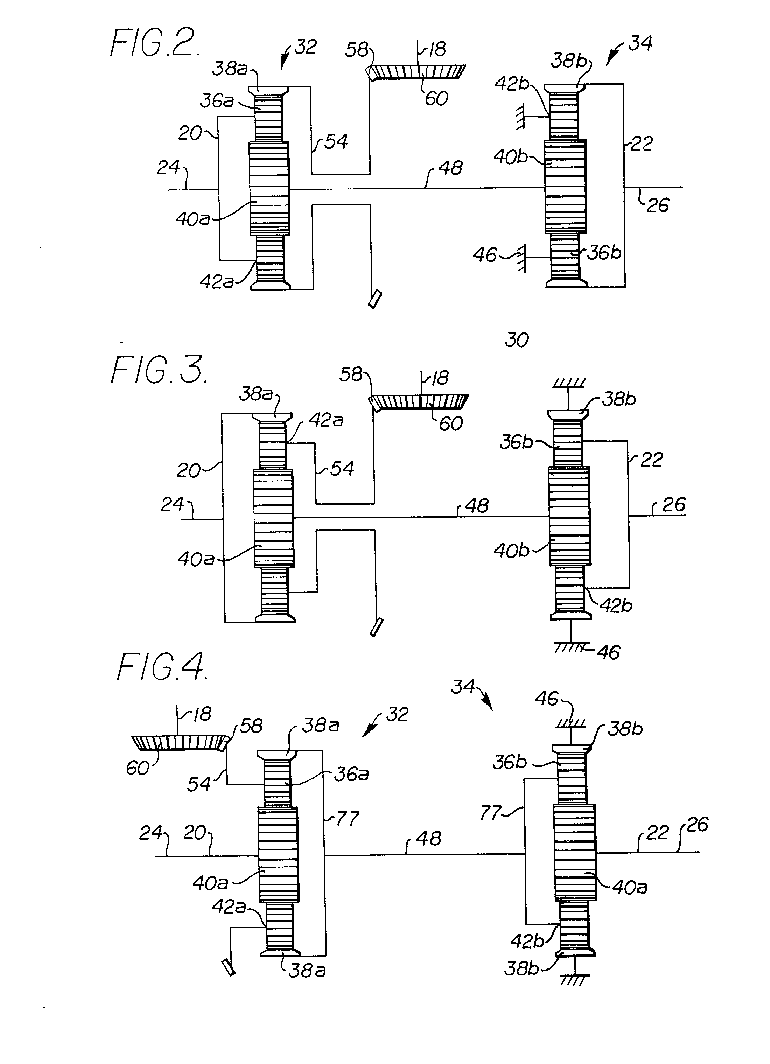

The embodiments of FIGS. 1 and 2 are substantially the same with the exception of the lockup means 62 provided in FIG. 1. FIG. 3 is, in effect, an inverse of the differential 10 of FIGS. 1 and 2 with respect to the interconnected first and second planetary gear assemblies 32,34. Said embodiments all provide a speed reduction differential and will be discussed together.

As is shown in FIGS. 1, 2 and 3, the first and second end portions 50,52 of the shaft 48 are connected to the sun elements 40a;b of the first and second planetary gear assemblies 32,34 respectively. One 38a;42a of the ring and carrier elements 38,42a of the first planetary gear assembly is connected to the motion receiving element 54 to receive the rotational input. The other one 42a;38a of said ring and carrier elements is connected to the first output element 20. A different one 42b;38b of the ring and carrier elements 38,42b of the second planetary gear assembly 34, relative to the one 38a;42a of the elements of the first planetary gear assembly which receives the rotational input, is fixed relative to the frame 46. The other one 42b;38b of said elements of the second planetary gear assembly is connected to the second output element 22. Thus, rotational input is directed to the ring 38a element in FIGS. 1 and 2 and is directed to the carrier 42a element in FIG. 3. The different input locations on the first planetary gear assembly 32 results in an inverse relationship of the elements which transmit the rotational output from the differential. In other words, the carrier 42a element is the output of the first planetary gear assembly 32 in FIG. 2, while the ring 38a element transmits the output from the first planetary gear assembly in FIG. 3.

In the operation of the embodiment of FIGS. 1 and 2, rotational input passes through the ring 38a element which causes rotation of the planet, sun and carrier 36a;40a;42a elements. Rotational output is taken from the rotating carrier 42a element and the rotation of the sun 40a element drives the sun 40b element of the second planetary gear assembly 34 through the shaft 48. Rotation of said sun element initiates rotation of the planet 36b elements about the fixed carrier 42b element to initiate rotational output from the rotating ring 38b element. The embodiment of FIG. 3 is similarly operable.

As will be evident to one skilled in the art, the relationship of the interconnected first and second planetary gear assemblies 32,34 in Figs. 1, 2 and 3 results in a torquing force increase through said differential, with an associated speed reduction at each of the output elements 20,22 relative to the rotational input when both the first and second output elements are rotating at the same speed. Thus, in the differential 10, the torquing force associated with the rotational output is multiplied relative to the torquing force associated with the rotational input. In other words, the differential, in combination or cooperation with the normal differentiation action associated with said differential, also provides an increase of the rotational speed of the rotational output relative to the input at the first and second output elements 20,22. The embodiments of FIGS. 1-3 and 5-7 are speed reducing differentials and the term torquing force multiplication refers to an actual increase in torque at the associated output elements by a factor predetermined with respect to the gear ratios of the respective differentials. The embodiment of FIG. 4, for example, is a speed increasing differential in which the rotational speeds of the output elements are greater than the rotational speed of the input. The torquing force associated with the output elements is proportionally reduced relative to the substantially equally divided torquing force passed from the rotational input to said output elements.

Differentiation in the differential 10 is based upon the relationship of the first and second planetary gear assemblies 32,34 which allows relative movement between the elements of said gear assemblies. For example, assume that the axle 24 substantially ceases to rotate owing to the associated work vehicle 10 turning a corner about the wheel associated with said axle. If the axle substantially stops, the first output element 20 is similarly stopped, as is the carrier element 42a of the first planetary gear assembly 32. This causes a proportionally faster rotation of the planet 36a elements of said first planetary gear assembly owing to the continued action of the rotational input on the ring 38a element. The result is a faster rotation of the sun 40a element and the interconnected shaft 48 and sun 40b element of the second planetary gear assembly 34. This faster rotation tends to correspondingly cause faster rotation of the planet 36b elements to increase the rotational speed through the ring 38b element to the second output element 22 and the associated axle 26 which provides the differential action between the two wheels of the tractor. Similarly, differential action will be provided between the two wheels of the work vehicle if the wheel associated with the second axle 26 is substantially stopped from rotation. Differential action of the embodiment of FIG. 3 is also similar in operation.

Differentiation in the differential 10 can be eliminated by engaging the clutch 66 in the embodiment of FIG. 1 to, in effect, connect the first and second output elements 20,22 together through the shaft 70. The result is to bypass the first and second planetary gear assemblies 32,34 and cause the output elements and associated axles 24,26 to rotate together. In low traction conditions this will prevent spinning of one wheel of the vehicle 10 relative to the other wheel and tend to transfer more torquing force to the wheel which has the better traction.

Referring now to the embodiment of FIG. 4, a differential 10 is shown which increases the rotational speed of each of the output elements relative to the rotational input. The torquing force is proportionally reduced to less than the one-half share of torquing force normally transmitted in a vehicle differential from the rotational input through the differential to each output element. The speed increasing differential interconnects the first and second planetary gear assemblies 32,34 through the ring 38a and carrier 42b elements, respectively. As shown, the support member 44 has connection members 77 which connect the shaft 48 to said ring and carrier elements. The rotational input is provided to the carrier element 42a and the first and second output elements 20,22 are connected to the sun 40a,40b elements of the first and second planetary gear assemblies respectively. The ring element 38b of the second planetary gear assembly is fixed to the frame 46 to provide the reaction member in the second planetary gear assembly.

In FIG. 5, the second planetary gear assembly 34 is represented by a double planet planetary gear assembly 34' which is interconnected to the first planetary gear assembly 32 through their respective sun 40a;b elements. The first and second output elements 20,22 are connected to the carrier 42a;b elements of the first and second planetary gear assemblies 32,34, respectively, and the rotational input is received through the ring 38a element of the first planetary gear assembly 32.

The embodiment of FIG. 6 is representative of a differential 10 which makes use of both first and second double planet planetary gear assemblies 32',34'. The rotational input is taken through the carrier 42a element of the first assembly and said first and second assemblies are interconnected between their respective sun elements 40a;40b across the shaft 48. The rotational output is taken through the ring 38a and carrier 42b to provide a speed reducing type differential.

In FIG. 7, another embodiment of the differential 10 is shown, by way of example, to demonstrate the flexibility of the differential. The differential of FIG. 7 results in approximately a 6:1 speed reduction at the output elements 20,22 relative to the rotational input to the differential. The rotational

-15-

input is directed to the sun element 40a through the motion receiving element 54 which is positioned about and rotatable relative to the first output element 20 and axle 24 portions associated with the differential. The rotational outputs are taken from the carrier 42a and ring 38b elements of the first and second planetary gear assemblies, respectively. Said gear assemblies are interconnected across the shaft 48 between the ring 38a and sun 40b elements. The shaft 48 of the support member 44 is connected to a motion transmitting member 78 of said support member in order to accommodate the configuration of the differential. As is shown, said motion transmitting member is positioned about and relative to the first output element 20.

Differential operation of the embodiments of FIGS. 4 through 7 is similar in operation to that as above described with respect to FIGS. 1 through 3 and will be understood from a study of the drawings in that respect. It should also be understood that one skilled in the art can readily calculate the various relationships of the elements of the planetary gear assemblies 32,34 to determine the values of the divided rotational output relative to desired rotational input. It should be further understood that the embodiments shown and described are merely representative of the various configurations of the differential which can be constructed according to the present invention for various applications. With reference to the work vehicle 12 above referred to, the differential provides an additional portion of said work vehicle through which speed reduction may be taken. This reduces the necessity of taking the entire speed reduction for the vehicle elsewhere in said vehicle and can result in eliminating or substantially reducing the size and complexity of various other speed reduction components of the vehicle which minimizes use of space and additional weight on said vehicle.

Other aspects, objects and advantages will become apparent from a study of the specification, drawings and appended claims.

## Claims

1.    A differential (10) for receiving a rotational input and transmitting a divided rotational output, comprising:

a frame (46);

a first planetary gear assembly (32) having planet, ring, sun and carrier (36,38,40,42a) elements and being associated with said frame (46), preselected first and second different ones of said ring, sun and carrier (38,40,42a) elements being positioned at locations sufficient for transmitting one portion of said rotational output in a preselected directional orientation and receiving said rotational input, respectively; and

a second planetary gear assembly (34) having planet, ring, sun and carrier (36,38,40,42b) elements and being associated with said frame (46), a preselected first one of said ring, sun and carrier (38,40,42b) elements being positioned at a location sufficient for transmitting another portion of said rotational output in said same preselected directional orientation, a preselected second different one of said sun, ring and carrier (38,40,42b) elements being connected to the remaining third one of said ring, sun and carrier (38,40,42a) elements of said first planetary gear assembly (32), the remaining third one of said ring, sun and carrier (38,40,42b) elements being fixed relative to said frame (46).

2.    The differential (10), as set forth in claim 1, wherein at least one of said first and second planetary gear assemblies (32,34) is a double planet planetary gear assembly (32',34').

3.    The differential (10), as set forth in claim 1, wherein said differential (10) has a support member (44) having first and second end portions (50,52) and being supported by and rotatable relative to said frame (46), said first and second end portions (50,52) being connected to said remaining third one of said ring, sun and carrier (38,40,42a) elements of said first planetary gear assembly (32) and said second preselected one of said ring, sun and carrier (38,40,42b) elements of said second planetary gear assembly (34), respectively.

4.    The differential (10), as set forth in claim 3, including first and second output elements (20,22), said first output element (20) being connected to said preselected first one of said ring, sun and carrier (38,40,42a) elements of said first planetary gear assembly (32) and said second output element (22) being connected to said preselected first one of said ring, sun and carrier (38,40,42b) elements of said second planetary gear assembly (34).

5.    The differential (10), as set forth in claim 4, wherein said differential (10) has differentiation of said rotational output and between said first and second output elements (20,22) and including lock-up means (62) for controllably initiating and terminating differentiation in said differential (10).

6.    The differential (10), as set forth in claim 5, wherein said lock-up means (62) includes means (64) for controllably connecting said first and second output elements (20,22) one to the other and freeing said first and second output elements (20,22) from connection one to the other.

7.    The differential (10), as set forth in claim 6, wherein said connecting and freeing means (64) is a clutch (66).

8.    The differential (10), as set forth in claim 6, wherein said lock-up means (62) includes a motion transmitting element (68) carried by said frame (16) and rotatable with said first output element (20) and relative to said frame (46) and said connecting and freeing means (64) connects said first and second output elements (20,22) by engaging said motion transmitting element (68) and said second output element (22) one with the other.

9.    The differential (10), as set forth in claim 8, wherein said support member (44) is positioned about and rotatable relative to said motion transmitting element (68).

10.    A drive train (27) of a work vehicle (12) for transmitting a rotational output through first and second output elements (20,22) in response to a rotational input comprising:
        a power source (14);
        a differential (10) having first and second planetary gear assemblies (32,34), said first planetary gear assembly (32) having planet, ring, sun and carrier (36,38,40,42a) elements and being associated with said frame (46), preselected first and second different ones of said ring, sun and carrier elements (38,40,42a) being positioned at locations sufficient for transmitting one portion of said rotational output in a preselected directional orientation and receiving said rotational input, respectively;

said second planetary gear assembly (34) having planet, ring, sun and carrier (36,38,40,42b) elements and being associated with said frame (46), a preselected first one of said ring, sun and carrier (38,40,42b) elements being positioned at a location sufficient for transmitting another portion of said rotational output in said preselected directional orientation, a preselected second different one of said sun, ring and carrier (38,40,42b) elements being rotatably tied with the remaining third one of said ring, sun and carrier (38,40,42a) elements of said first planetary gear assembly (32), the remaining third one of said ring, sun and carrier (38,40,42b) elements being fixed relative to said frame (46);

a driveshaft (18) positioned between said power source (14) and said differential (10) and being of a configuration sufficient for transmitting said rotational input; and

said first and second output elements (20,22) being connected to said differential (10).

11. In a differential (10) for receiving a rotational input and transmitting a divided rotational output, said differential (10) having first and second planetary gear assemblies (32,34) each having planet, ring, sun and carrier (36,38,40,42a;b) elements, said rotational input being received through a preselected first one of said ring, sun and carrier (38,40,42a) elements of said first planetary gear assembly (32), said divided rotational output being transmitted through a preselected second different one of said ring, sun and carrier (38,40,42a) elements of said first planetary gear assembly (32) and a preselected first one of said ring, sun and carrier elements (38,40,42b) of said second planetary gear assembly (34), the improvement comprising:

said first and second planetary gear assemblies (32,34) being tied in operable relationship one to the other through the remaining third one of said ring, sun and carrier (38,40,42a) elements of said first planetary gear assembly (32) and a preselected second different one of said ring, sun and carrier (38,40,42b) elements of said second planetary gear assembly (34) and being free from being tied in operable relationship one to the other through the other ones of said ring, sun and carrier (38,40,42a;b) elements of said first and second planetary gear assemblies (32,34); and

said divided rotational output having one portion of said rotational output transmitted through said second one of said ring, sun and carrier (38,40,42a) elements of said first planetary gear assembly (32) in a preselected rotational orientation and another portion of said rotational output transmitted through said first one of said ring; sun and carrier (38,40,42b) elements of said second planetary gear assembly (34) in said same preselected rotational orientation.

12. In a differential (10) for receiving a rotational input and transmitting a rotational output through first and second output elements (20,22), said differential (10) having a frame (46) and first and second planetary gear assemblies (32,34) each having planet, ring, sun and carrier (36,38,40,42a;b) elements and being associated with said frame (46), preselected first and second different ones of said ring; sun and carrier (38,40,42a) elements of said first planetary gear assembly (32) being connected to said first output element (20) and positioned at a location sufficient for receiving said rotational input, respectively, first and second preselected different ones of said ring, sun and carrier (38,40,42b) elements of said second planetary gear assembly (34) being connected to said second output element (22) and connected to the remaining third one of said ring, sun and carrier (38,40,42a) elements of said first planetary gear assembly (34), respectively, the remaining third one of said ring, sun and carrier (38,40,42b) elements of said second planetary gear assembly (34) being fixed relative to said frame, the improvement comprising:

said first and second output elements being rotatable in a common directional orientation in response to said differential transmitting said rotational output.

13. In a differential (10) for receiving a rotational input and transmitting a rotational output through first and second output elements (20,22), said differential (10) having a support member (44), a frame (46) and first and second planetary gear assemblies (32,34), said support member (44) having first and second end portions (50,52) and being supported by and rotatable relative to said frame (46), said first and second planetary gear assemblies (32,34) each having planet, ring, sun and carrier (36,38,40,42a;b) elements and being carried by said support member (46), the improvement comprising:

said first and second end portions (50,52) of said support member (46) being connected to said sun (40a;b) elements of said first and second planetary gear assemblies (32,34), respectively;

one of said ring and carrier (38,42a) elements of said first planetary gear assembly (32) being positioned at a location sufficient for receiving said rotational input;

-23-

a different one of said ring and carrier (42,38b) elements of said second planetary gear assembly (34) relative to said one of said ring and carrier (38,42a) elements of said first planetary gear assembly (32) being fixed relative to said frame (46); and

said first and second output elements (20,22) being connected to the other one of said ring and carrier (38,42a) elements of said first planetary gear assembly (32) and the other one of said ring and carrier (38,42b) elements of said second planetary gear assembly (34), respectively.

14. A differential (10) for receiving a rotational input and transmitting a divided rotational output, comprising:

a frame (46);

a first planetary gear assembly (32) having planet, ring, sun and carrier (36,38,40,42a) elements and being associated with said frame (46), preselected first and second different ones of said ring, sun and carrier (38,40,42a) elements being positioned at locations sufficient for transmitting one portion of said rotational output and receiving said rotational input, respectively; and

a second planetary gear assembly (34) having planet, ring, sun and carrier (36,38,40,42b) elements and being associated with said frame (46), a preselected first one of said ring, sun and carrier (38,40, 42b) elements being positioned at a location sufficient for transmitting another portion of said rotational output and being a different one of said ring, sun and carrier (38,40,42b) elements relative to said first one of the ring, sun and carrier (38,40,42a) elements of said first planetary gear assembly (34), a preselected second different one of said sun, ring and carrier (38,40,42b) elements being connected to the remaining third one of said ring, sun and carrier (38,40,42a) elements of said first planetary gear assembly (32), the remaining third one of said ring, sun and carrier (38,40,42b) elements being fixed relative to said frame (46).

FIG. I.

FIG.2.

FIG.3.

FIG.4.

## FIG.5.

## FIG.6.

## FIG.7.